# EUROPEAN PATENT SPECIFICATION

(11) **EP 3 090 888 B1**
(45) Date of publication and mention of the grant of the patent: **11.12.2019**
(21) Application number: 15166263.2
(22) Date of filing: 04.05.2015
(51) Int. Cl.: B60D 1/36, B60D 1/48, B60D 3/00, B60D 1/00

(54) **A TOWING HITCH ASSEMBLY AND A TOWING SYSTEM**
ANHÄNGEKUPPLUNGSANORDNUNG UND ANHÄNGESYSTEM
ENSEMBLE D'ATTELAGE DE REMORQUAGE ET SYSTÈME DE REMORQUAGE

(43) Date of publication of application: 09.11.2016
(73) Proprietor: Toyota Material Handling Manufacturing Sweden AB, 595 81 Mjölby (SE)
(72) Inventor: Arvidsson Klint, Jakob, 595 51 Mjölby (SE)
(74) Representative: Zacco Sweden AB

(56) References cited:
- US-A- 2 467 816
- US-B1- 6 394 481

## Description

The present application relates to a towing hitch assembly according to the preamble of claim 1, and it also relates to a towing system according to claim 8.

### BACKGROUND

In industrial manufacturing facilities it has been more and more common to use auto guided vehicles for transports within the industrial manufacturing facility. The transports can for example be of elements to be assembled at an assembly line or it could be waste products to be disposed of in another part of the facility. The aim of using auto guided vehicles is to increase efficiency and to reduce man hours for simple tasks. The auto guided vehicles can either carry the transported goods by themselves or use another vehicle for carrying the goods. In the latter case some sort of wagon is often used.

Document US 2,467,816 discloses a coupling for a tractor operable from the operator's seat.

### BRIEF DESCRIPTION OF THE INVENTION

When an auto guided vehicle is used in a towing situation there is a further need to reduce man hours by avoiding human interaction for connection and disconnection of a carrier vehicle from a towing vehicle. In general this can be achieved by having a mechanism on the towing vehicle that disengages a connecting recess on a carrier vehicle. However it has been found that the manoeuvring of the combined system of a towing vehicle and a carrier vehicle can be limited.

A solution to at least one of the presented problems is provided by a towing hitch assembly wherein, the towing hitch assembly comprises a first part and a second part, wherein the first part and the second part are joined through a first essentially vertical axis, wherein the two parts create a connecting section, to which a towing vehicle can connect, wherein the towing hitch assembly is arranged to be able to attain a first and a second configuration, wherein in the first configuration the towing hitch assembly is in connectable configuration characterised in that, wherein by cooperation of the first part and the second part a recess is created, wherein when in the second configuration the towing hitch assembly engages a protrusion of a towing vehicle by reducing the size of the recess, and in that the transition from the first configuration to the second configuration is actuated by a towing vehicle, wherein the towing hitch assembly can attain the first configuration automatically by means of at least one retraction device coupled to at least one of the first part or the second part.

The advantage of this towing hitch assembly is that a towing vehicle will not start wobbling when towing using the towing hitch assembly. If the towing vehicle starts wobbling the carrier vehicle will follow and wobble. There is a risk that the control is lost. One of the main problems is that in general the complete towing vehicle adjusts the directions. Thus mechanical shocks are eliminated from a towed carrier vehicle, when turning of the towing vehicle. In the first configuration the towing hitch assembly is ready for engagement to a towing vehicle. Thus as the towing hitch assembly is arranged to be in the first configuration when not in engagement by a towing vehicle.

According to a further aspect, the towing hitch assembly is arranged to attain the second configuration by a towing vehicle engaging the recess and pushing the first part and the second part in a predetermined direction, such that a rotation around the axis provides the narrowing of the recess.

This provides for a particular good engagement between the towing vehicle and the towing hitch assembly.

According to one aspect the towing hitch assembly the retraction device comprises at least one helical spring and/or wherein the retraction device comprises at least one gas spring.

Helical springs are cost effective, simple and reliable. They can be acquired off the shelf and need no particular modification. A gas spring has a damped movement when it exerts its force after tension is applied to it. Thus it provides a more smooth movement, which is more silent. As the movement is slower the towing hitch assembly is less likely to wear out due to rapid movement. They can also be acquired off the shelf and need no modification. A combination of a helical spring and gas spring gives a better ability to modify the force of retraction.

According to a further aspect, the connecting section can guide a protrusion of a towing vehicle towards the recess, wherein the guiding is performed by two walls that are provided by the first part and the second part and that the respective wall has its origin at the rim of the recess, such that the walls provides wedge shape narrowing in the direction of the recess.

By providing a guiding for a towing vehicle it is considerably simplified to engage the towing hitch assembly. This provides for smooth operation which allows for smaller mistakes made by the towing vehicle when seeking to engage the towing hitch assembly. The advantage of this aspect is that it provides a large base line where a protrusion of a towing vehicle can access the recess.

According to a further aspect, the towing hitch assembly is arranged such that it can engage a towing vehicle body.

This is advantageous as the body of the vehicle is relatively broad it provides for a good engagement.

A towing hitch assembly wherein, there is provided at least two grip means which can engage a towing vehicle, when the towing hitch assembly is in its second configuration, preferably the grip means are arranged on the towing hitch assembly such that engaging is performed by griping around a complete towing vehicle, or a protruding section of a towing vehicle.

This is particularly favourable as it prevents a towing vehicle from performing a snake movement when seeking to make a turn. The towing vehicle used is in general adjusting its course by a adjusting the complete chassis direction. This can in certain cases lead to that the adjustments come out of control. Thus an effect of the grip means is that this prevents this occurrence as the towing vehicle is more unified with the towing hitch assembly and consequently a carrier vehicle. By engaging a section of the towing vehicle a further advantage can be achieved in that the engagement can be adjusted by adjusting the shape of the section of the towing vehicle, thus giving a better engagement grip.

According to a further aspect there are provided two further essentially vertical axes at a respective end of the first part and the second part, wherein the two axes can rotate together with the axis, when a towing vehicle engages the towing hitch assembly.

The engagement between the towing vehicle and the towing hitch assembly is thus made in a triangular configuration, which is very stable.

At least one of the discussed problems is further solve by a towing system comprising a towing vehicle, a carrier vehicle, and a towing hitch assembly according to any of the aspects above, wherein the towing hitch assembly is attached to the carrier vehicle.

The towing system has several advantages in that it provides for a simple operation. It is also very reliable and both towing vehicle and carrier vehicle can be adapted such that they operate efficiently with the towing hitch assembly. This is in bright contrast to any ordinary towing situation where the towing vehicle never is adapted other than providing a connection to a towing hitch. The towing system is particularly advantageous for transports within a production facility.

According to a further aspect of the towing system of the above there is provided a towing system, wherein the carrier vehicle comprises two swivelling wheels, preferably four swivelling wheels.

By applying two swivelling wheels to the carrier vehicle, the manoeuvrability of the towing system is considerably increased. It further gives the advantage that if a human desires to move the back end of the carrier vehicle sideways, this can be easily achieved without applying considerably force. If four swivelling wheels are applied, both ends of the carrier vehicle can be moved more freely. If no further wheels in addition to the four swivelling wheels are applied, the carrier vehicle can be moved with easy in any direction.

According to a further aspect of the above there is provided a towing system, wherein the carrier vehicle has a limited travel speed of 15 km/h, preferably 7 km/h, even more preferred 3 km/h, and/or the carrier vehicle has a maximum total weight of 400 kg, preferably 200 kg.

By applying a limited travel speed, the vehicle does not risk to damage any persons when moving. It is also an advantage that the carrier vehicle can be designed in a particularly simple manner, thus being very cost effective but also lightweight. Further it is possible to use particularly simple ways of engagement between the towing hitch and the carrier vehicle without jeopardizing the security of the transport. The advantage of providing a maximum total weight of 400 kg, or even 200 kg, is that the basic design can be kept simple. It can be made up by a simple frame work construction.

According to a further aspect of the above there is provided a towing system, wherein the towing system is adopted for indoor use only.

The advantage of this aspect is that the towing vehicle, the towing hitch assembly and the carrier vehicle can be made from simple materials that need not be able to manage rain, wind etc. It is a further advantage that the support surface on which the system is to operate is in general flat and without irregularities found outdoors. Thus the both the weight and cost of the system can be reduced. Electronics of the towing vehicle need not be water proof. The materials used need not be corrosion resistant and do not need to be stable versus ultraviolet light.

According to a further aspect of the above there is provided a towing system, wherein the towing vehicle has a high point that engages the connecting section of the towing hitch assembly, such that the towing vehicle in full can pass under the towing hitch assembly for engaging the connecting section.

This is particularly advantageous as it provides for a simple and stable towing vehicle. As the towing vehicle is low it does not turn over easily. And further the limited height of the towing vehicle itself provides for a function of connection that does not need any complicated movement patterns by the towing vehicle as it can move forward in an essentially straight line when connecting to the towing hitch assembly. This is in contrast to all other vehicles using a towing hitch which need to move rearwards to a towing hitch prior to connecting to it.

According to a further aspect of the above there is provided a towing system, wherein the high point is a protrusion, preferably the high point is a pin.

A pin is a particularly effective and simple high point that allows for easy engagement.

According to a further aspect of the above there is provided a towing system, wherein the width of the towing vehicle is smaller than the width of the carrier vehicle, and/or, preferably the width of the towing vehicle is smaller than the width of towing hitch assembly.

As the width of the towing vehicle is smaller than the carrier vehicle it is possible for the towing vehicle to pass under the carrier vehicle with ease. If the width of the towing vehicle is smaller than the width of the towing hitch assembly it is particularly easy to install the towing hitch assembly, there is no need for modification of the carrier vehicle width.

According to a further aspect of the above there is provided a towing system, wherein the towing vehicle is an auto guided vehicle, preferably being an electric vehicle.

By having an auto guide vehicle performing the transports and connection and disconnection, the need for human interaction is minimized and the productivity is considerably increased.

According to a further aspect of the above there is provided a towing system, wherein the towing hitch assembly is attached to the underside of the carrier vehicle, preferably at an essentially centred position.

This provides for a very compact system as the towing vehicle is preferably essentially not protruding outside the outer periphery of the carrier vehicle. Thus the system achieves a sort of turtle appearance.

### LIST OF DRAWINGS

Figure 1 discloses two configurations A and B of a towing hitch assembly according to one aspect.
Figure 2 discloses a towing hitch assembly attached to a carrier vehicle and a towing vehicle that is about to engage the towing hitch assembly, it also discloses a towing hitch system.
Figure 3 discloses a towing hitch assembly in configuration B with an engaged towing vehicle and towing hitch system in operation.
Figure 4 discloses a towing vehicle with a high point.
Figure 5 discloses a towing vehicle with a protruding section.
Figure 6 discloses one aspect of a towing hitch assembly with an attached gas spring.
Figure 7 discloses a towing hitch assembly in horizontal direction in engagement direction, and in configuration A.

### DETAILED DESCRIPTION

The general object or idea of embodiments of the present disclosure is to address at least one or some of the disadvantages with the prior art solutions described above as well as below. The various steps described below in connection with the figures should be primarily understood in a logical sense.

The terminology used herein is for the purpose of describing particular aspects of the disclosure only, and is not intended to limit the disclosure to any particular embodiment. As used herein, the singular forms "a", "an" and "the" are intended to include the plural forms as well, unless the context clearly indicates otherwise.

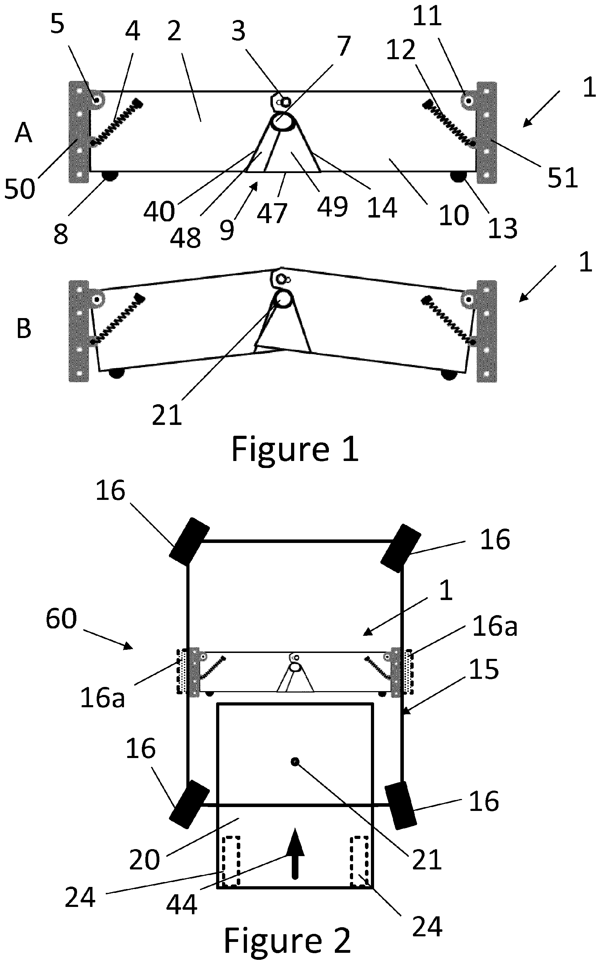

According to Figure 1 there is disclosed a towing hitch assembly 1. The towing hitch assembly comprises a first part 2 and a second part 10. The first part 2 and the second part 10 are joined by a mutual axis 3. The first and second parts 2, 10 can rotate together around the first axis 3. The axis 3 is essentially vertical when the towing hitch assembly 1 is in operation. When rotation occurs around the axis 3, a connecting section 9 has its dimensions modified. There is also provided a recess 7. The recess 7 is provided by the first and second part 2, 10 together in cooperation. Two overlapping sections 48 and 49 of the first and the second part 2, 10 provide the recess 7. The first part 2 and the second part 10 have two respective further axes 5, 11. The axes 5, 11 are essentially vertical when the towing hitch assembly is in operation. As seen in Figure 1 the axes 5, 11 are positioned at the left and right upper corner of the first and the second part 2, 10. This provides for that the respective sides of the first and the second part 2, 10 does not protrude in transversal direction when rotation around the respective axes 5, 11 occurs. Thus the towing hitch assembly is particularly easy to attach to a carrying vehicle 15. The towing hitch assembly 1 is further optionally provided with two side beams 50, 51. The side beams are joined to the first and the second part 2, 10 by the respective axes 5, 11. The beams 50, 51 attach to a carrier vehicle 15.

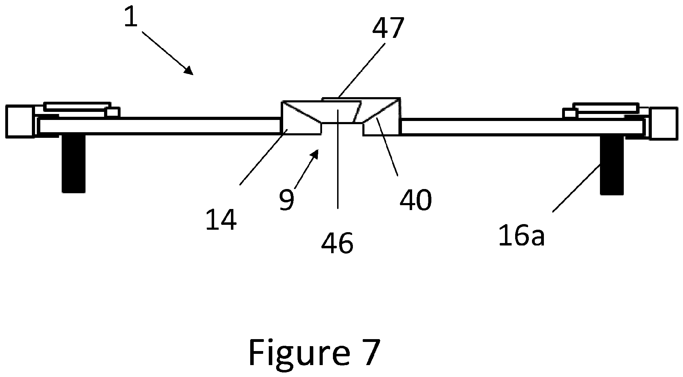

The connecting section 9 is best studied in Figure 7, where one can see that it preferably has a conical shape. The connection section 9 is preferably conical both on the upper side 46 and the sides 14, 40. This means that the upper side 46 slopes down wards from the base line 47 towards a recess 7. It is also thinkable that the upper side 46 is designed horizontally. The connecting section 9 is provided by the two overlapping sections 48, 49 of the first part 2 and the second part 10.

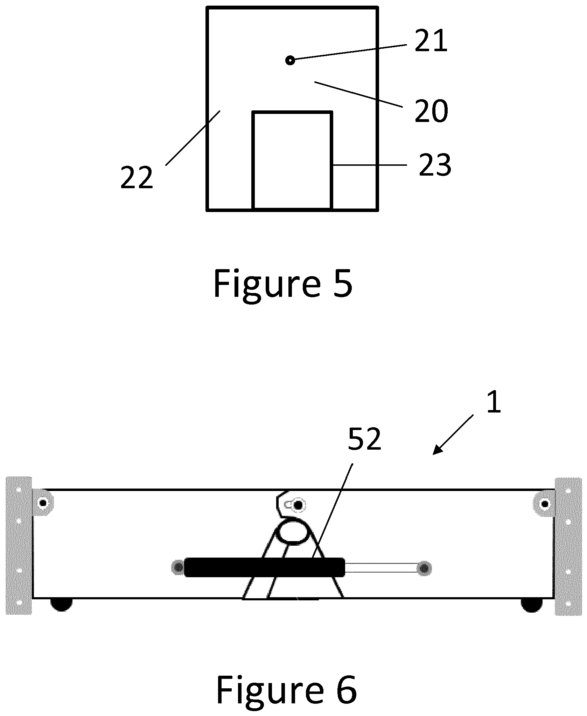

The towing hitch assembly 1 is further provided with a retraction device 4, 12, 52 can be seen in Figure 1 and 6. The retraction device is preferably a helical spring 4. It should be attached to the first part 2 of the towing hitch assembly 1, and to the carrier vehicle 15 frame. The spring can be attached as seen in Figure 1, where it is attached in an angle from the first part to the beam 50; this provides a good direction of pulling when the towing hitch assembly is pulled to its first configuration A. It is also possible to attach a further helical spring 12 such that a full spring effect can be achieved both on the first part 2 and the second part 10. The retraction device 5 could also be made from a gas spring 52 or a combination of a gas spring 52 or a helical spring 4, 12. Other designs are also thinkable of course. It is possible to apply an electrical drive mechanism that applies to the first part 2 and/or the second part 10. It is an aim of the retraction device 4, 10, 52 to keep the towing hitch assembly 1 in its first configuration A. By having this way of keeping towing hitch assembly 1 in the first configuration, this provides for possibility engage the towing hitch assembly 1 without having to unlock any extra locks etc.

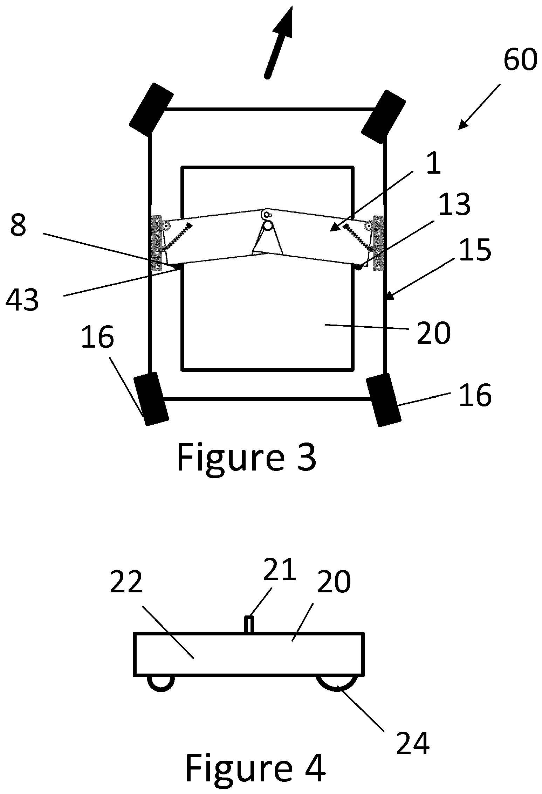

The towing hitch assembly 1 is further preferably arranged such that it can engage a towing vehicle body 22, 23. This is preferably made by engaging the full width of the towing vehicle body 22. For this the towing hitch assembly 1 is preferably provided with two grip means 8, 13 as seen in figure 1 and 3. Thus when the towing hitch assembly 1 is in second configuration B the grip means engage the respective side of a towing vehicle 20. It is also possible that the grip means 8, 13 are so positioned that they can engage a section 23 of a towing vehicle body 22. This means that the grip means 8, 13 are positioned closer together for providing a narrower grip. The grip means are preferably made of a resilient material, such as rubber, foamed plastic or the like.

The towing hitch assembly 1 can thus attain two configurations. The towing hitch assembly 1 has a first configuration A when in a resting position. In this configuration A the retraction devices 4, 12, 52 have pulled the towing hitch assembly 1 to a stop. In this configuration the towing hitch assembly 1 has an essentially straight configuration, as seen in Figure 1 and Figure 6. In the first configuration A the towing hitch assembly 1 is ready to be engaged by a towing vehicle 20. The towing hitch assembly 1 engages a towing vehicle 1 in the following manner. A towing vehicle 20 enters under a carrier vehicle 15 as seen in Figure 2. A protrusion 21 on the towing vehicle 20 engages the towing hitch assembly 1 according to Figure 3. The transition from the first configuration A to the second configuration B as seen in Figure 1 is operated by the movement of the towing vehicle 20 in direction of the towing hitch assembly 1. The protrusion 21 is preferably guided by the connecting section 9 as seen in Figure 7. In this stage the protrusion 21 can be guided by the sides 14, 40 and 47 of the connecting section. As the protrusion 21 reaches the recess 7 it will engage the recess 7 and pull the towing hitch assembly 1 in the predetermined direction of the arrow 44 of Figure 2. As the towing vehicle 1 performs this pull, the first part 2 and the second part 10 are rotated around the axis 3. As this rotation occurs the recess 7 is narrowing by approaching of the respective sides 40 and 14 to each other of the first 2 and the second part 10. This approaching stops as an engagement of the recess 7 is achieved on the protrusion 21. In a further aspect the towing hitch assembly 1 is provided with gripping means 8, 13. These gripping means 8, 13 approaches each other on a circular path around the axis 3. As they approach the body 22 of a towing vehicle the gripping means 8, 13 engages the body of the towing vehicle 20. According to another aspect the gripping means 8, 13 are positioned such that they can engage a section 23 of a towing vehicle 20, see Figure 5. This section 23 is preferably a bit narrower than the body 22 of the vehicle. This still gives a good engagement, but gives less leverage and allows for a bit more movement of the towing vehicle 2.

The disclosure also relates to a towing system 60, as seen in Figure 2 and Figure 3. The towing system 60 comprises a towing hitch assembly 1 as described above, a towing vehicle 20 as seen in Figure 4 and a carrier vehicle 15 as seen in Figure 2 and 3.

The towing vehicle 20 is preferably an electrical vehicle. The power to the towing vehicle 20 is preferably provided from an internal battery that is rechargeable. The important design of the towing vehicle is that it is lower than the height over the surface where the towing hitch assembly 1 is attached to the carrier vehicle 15. A mayor aspect of the present disclosure is that at operation, the towing vehicle 20 passes in full under the carrier vehicle 15 and engages the connecting section 9 of the towing hitch assembly 1. And the towing vehicle 20 then continues its movement in the direction of the towing hitch assembly 1 and alters the configuration of the towing hitch assembly 1 from the first configuration A to the second configuration B, Figures 1-3. The engagement of the towing vehicle 20 is preferably made by the high point 21 of the towing vehicle 20. The high point is preferably a pin 21. The pin 21 can have a spring resilient function such that when it is pressed down from above it moves resiliently downwards. This provides for an easy engagement of the connecting section 9 as the pin can be partly pressed down beginning at the baseline 47 of the connecting section 9 and then be more pressed down by the upper side 46 as the towing vehicle 20 moves under the towing hitch assembly 1. When the pin 21 reaches the connecting section 9 it can resiliently extend upwards and thereby engage the recess 7. And thereafter perform the operation of altering the towing hitch assembly 1 from its first configuration A, to its second configuration B. The towing vehicle 20 is preferably an AGV or an auto guided vehicle, this means that it can operate on its own without direct human control. This means that it can be programmed to perform tasks and then perform them without any human intervention. The towing vehicle 20 is preferably controlled by providing two essentially parallel wheels that can be operated in different directions or alternatively one of the wheels 24, Figure 2, 4, can be braked as the other is driven, or one wheel 24 is driven and the other 24 is free wheeled.

When releasing the first part, the towing vehicle preferably lowers the high point 21. This is performed by a non-disclosed mechanism within the towing vehicle 20. After this is performed the towing vehicle 20 can move freely and the retraction device 8, 13, 52 retracts the towing hitch assembly to its first configuration A.

The carrier vehicle 15 is preferably built from a structure of tubes. The carrier vehicle is preferably adapted for indoor use. Thus it can be made in a very simple manner. The speed limit for the carrier vehicle is preferably 15 km/h more preferably 10 km/h or more preferable 7 km/h, in general 3 km/h is often used. The low speed limit provides for that the carrier vehicle can have a very simple configuration. The carrier vehicle 15 preferably comprises at least two swivelling wheels 16, see Figure 2, and 3. There can be more swivelling wheels 16 if desired. And of course there can be more than four wheels. For example there can be a configuration with two swivelling wheels at the front and back of the carrier vehicle and two wheels 16a around the middle in longitudinal direction, see option in Figure 2. Preferably, in this configuration, the middle wheels 16a are linear wheels with no swivelling function. And further if middle wheels 16a are applied they should bear most of the weight of the load carrier vehicle. This is preferably achieved by providing that the middle wheels 16a protrude 5 mm longer down compared to the swivelling wheels 16. This in turn means that the swivelling wheels 16 have the main function to be support wheels not to be weight carrier wheels.

The carrier vehicle 15 has a maximal total weight of 400 kg, preferably 200 kg.

The towing hitch assembly 1 is preferably attached to the underside of the carrier vehicle 15, preferably at an essentially centred position. Attachment is preferably made to beams or tubes running in the longitudinal direction of the carrier vehicle 15. This provides for a very compact system 60 as the towing vehicle 20 is preferably essentially not protruding outside the outer periphery of the carrier vehicle 15. Thus the system 60 achieves what could be called a turtle appearance. This saves space in a manufacturing facility where the system 60 is to be operated.

## Claims

1. A towing hitch assembly (1) wherein, the towing hitch assembly (1) comprises a first part (2) and a second part (10), wherein the first part (2) and the second part (10) are joined through a first essentially vertical axis (3), wherein the two parts (2, 10) create a connecting section (9), to which a towing vehicle (20) can connect, wherein the towing hitch assembly (1) is arranged to be able to attain a first and a second configuration (A, B), wherein in the first configuration (A) the towing hitch assembly (1) is in connectable configuration wherein, by cooperation of the first part (2) and the second part (10) a recess (7) is created, wherein when in the second configuration (B) the towing hitch assembly (1) engages a protrusion (21) of a towing vehicle (20) by reducing the size of the recess (7), and in that the transition from the first configuration (A) to the second configuration (B) is actuated by a towing vehicle (20), **characterized in that**
the towing hitch assembly can attain the first configuration (A) automatically by means of at least one retraction device (4, 12, 52) coupled to at least one of the first part (2) or the second part (10).

2. A towing hitch assembly (1) according to claim 1, wherein the towing hitch assembly (1) is arranged to attain the second configuration (B) by a towing vehicle engaging the recess (7) and pushing the first part (2) and the second part (10) in a predetermined direction (44), such that a rotation around the axis (3) provides the narrowing of the recess (7).

3. A towing hitch assembly (1) according to any of the claims 1-2, wherein the retraction device comprises at least one helical spring (4, 12) and/or wherein the retraction device comprises at least one gas spring (52).

4. A towing hitch assembly (1) according to any of the clams above, wherein the connecting section (9) can guide a protrusion (21) of a towing vehicle (20) towards the recess (7), wherein the guiding is performed by two walls (40, 14) that are provided by the first part (2) and the second part (10) and that the respective edge (40, 14)) has its origin at the rim of the recess (7), such that the edges provides wedge shape narrowing in the direction of the recess (7).

5. A towing hitch assembly (1) according to any of the claims above, wherein the towing hitch assembly (1) is arranged such that it can engage a towing vehicle body (22).

6. A towing hitch assembly (1) according to any of the claims above, wherein there is provided at least two grip means (8, 13) which can engage a towing vehicle (20), when the towing hitch assembly (1) is in its second configuration (B), preferably the grip means (8, 13) are arranged on the towing hitch assembly (1) such that engaging is performed by griping around a complete towing vehicle body (22), or a protruding section (23) of a towing vehicle (20).

7. A towing hitch assembly (1) according to any of the claims above, wherein, there are provided two further essentially vertical axes (5, 11) at a respective end of the first part (2) and the second part (10), wherein the two axes (5, 11) can rotate together with the axis (3), when a towing vehicle (20) engages the towing hitch assembly (1).

8. A towing system comprising a towing vehicle (20), a carrier vehicle (15), and a towing hitch assembly (1) according to any of the claims above, wherein the towing hitch assembly (1) is attached to the carrier vehicle (15).

9. A towing system according to claim 8, wherein the carrier vehicle (15) comprises two swivelling wheels (16), preferably four swivelling wheels.

10. A towing system according to claim 8 or 9, wherein the carrier vehicle (15) has a limited travel speed of 15 km/h, preferably 7 km/h, even more preferred 3 km/h, and/or the carrier vehicle (15) has a maximum total weight of 400 kg, preferably 200 kg.

11. A towing system according to any of the claims 8-10, wherein the towing system is adopted for indoor use only.

12. A towing system according to any of the claims 8-11 above, wherein the towing vehicle (20) has a high point (21) that engages the connecting section (9) of the towing hitch assembly (1), such that the towing vehicle (20) in full can pass under the towing hitch assembly (1) for engaging the connecting section (4).

13. A towing system according to 8-12, wherein the high point is a protrusion (21), preferably the high point is a pin (21).

14. A towing system according to any of the claims 8-13, wherein the width of the towing vehicle (20) is smaller than the width of the carrier vehicle (15), and or, preferably the width of the towing vehicle (20) is smaller than the width of towing hitch assembly (1).

15. A towing system according to any of the claims 8-14, wherein the towing vehicle (20) is an auto guided vehicle, preferably being an electric vehicle.

16. A towing system according to any of the claims 8-15, wherein the towing hitch assembly (1) is attached to the underside of the carrier vehicle (15), preferably at an essentially centred position.

## Patentansprüche

1. Anhängekupplungsanordnung (1), wobei die Anhängekupplungsanordnung (1) einen ersten Teil (2) und einen zweiten Teil (10) umfasst, wobei der erste Teil (2) und der zweite Teil (10) durch eine erste im Wesentlichen vertikale Achse (3) verbunden sind, wobei die zwei Teile (2, 10) einen Verbindungsabschnitt (9) herstellen, mit dem ein Zugfahrzeug (20) verbunden werden kann, wobei die Anhängekupplungsanordnung (1) dafür eingerichtet ist, eine erste und eine zweite Konfiguration (A, B) erreichen zu können, wobei die Anhängekupplungsanordnung (1) in der ersten Konfiguration (A) in einer verbindbaren Konfiguration ist, wobei eine Ausnehmung (7) durch Zusammenwirken des ersten Teils (2) und des zweiten Teils (10) hergestellt wird, wobei die Anhängekupplungsanordnung (1) in der zweiten Konfiguration (B) mit einem Vorsprung (21) eines Zugfahrzeugs (20) durch Verringerung der Größe der Ausnehmung (7) in Eingriff geht, und dass der Übergang von der ersten Konfiguration (A) zur zweiten Konfiguration (B) durch ein Zugfahrzeug (20) betätigt wird, **dadurch gekennzeichnet, dass** die Anhängekupplungsanordnung mittels mindestens einer Rückzugvorrichtung (4, 12, 52), die mit mindestens einem des ersten Teils (2) oder des zweiten Teils (10) gekoppelt ist, automatisch die erste Konfiguration (A) erreichen kann.

2. Anhängekupplungsanordnung (1) nach Anspruch 1, wobei die Anhängekupplungsanordnung (1) dafür eingerichtet ist, die zweite Konfiguration (B) dadurch zu erreichen, dass ein Zugfahrzeug mit der Ausnehmung (7) in Eingriff geht und den ersten Teil (2) und den zweiten Teil (10) in eine vorgegebene Richtung (44) schiebt, so dass eine Rotation um die Achse (3) herum die Einengung der Ausnehmung (7) bereitstellt.

3. Anhängekupplungsanordnung (1) nach einem der Ansprüche 1-2, wobei die Rückzugvorrichtung mindestens eine spiralförmige Feder (4, 12) umfasst, und/oder wobei die Rückzugvorrichtung mindestens eine Gasfeder (52) umfasst.

4. Anhängekupplungsanordnung (1) nach einem der vorhergehenden Ansprüche, wobei der Verbindungsabschnitt (9) einen Vorsprung (21) eines Zugfahrzeugs (20) gegen die Ausnehmung (7) führen kann, wobei die Führung mittels zwei Wände (40, 14) durchgeführt wird, die durch den ersten Teil (2) und den zweiten Teil (10) bereitgestellt werden, und dass die jeweilige Kante (40, 14)) am Rand der Ausnehmung (7) anfängt, so dass die Kanten eine keilförmige Einengung in Richtung der Ausnehmung (7) bereitstellen.

5. Anhängekupplungsanordnung (1) nach einem der vorhergehenden Ansprüche, wobei die Anhängekupplungsanordnung (1) so eingerichtet ist, dass sie mit einem Zugfahrzeugkörper (22) in Eingriff gehen kann.

6. Anhängekupplungsanordnung (1) nach einem der vorhergehenden Ansprüche, wobei mindestens zwei Greifmittel (8, 13) vorgesehen sind, die mit einem Zugfahrzeug (20) in Eingriff gehen können, wenn die Anhängekupplungsanordnung (1) in der zweiten Konfiguration (B) ist, vorzugsweise sind die Greifmittel (8, 13) auf der Anhängekupplungsanordnung (1) angeordnet, so dass das Eingreifen durch Greifen um einen ganzen Zugfahrzeugkörper (22) oder einen vorspringenden Abschnitt (23) eines Zugfahrzeugs (20) herum durchgeführt wird.

7. Anhängekupplungsanordnung (1) nach einem der vorhergehenden Ansprüche, wobei zwei weitere im Wesentlichen vertikale Achsen (5, 11) an einem jeweiligen Ende des ersten Teils (2) und des zweiten Teils (10) vorgesehen sind, wobei die zwei Achsen (5, 11) zusammen mit der Achse (3) drehen können, wenn ein Zugfahrzeug (20) mit der Anhängekupplungsanordnung (1) in Eingriff geht.

8. Zugsystem umfassend ein Zugfahrzeug (20), ein Trägerfahrzeug (15) und eine Anhängekupplungsanordnung (1) nach einem der vorhergehenden Ansprüche, wobei die Anhängekupplungsanordnung (1) am Trägerfahrzeug (15) befestigt ist.

9. Zugsystem nach Anspruch 8, wobei das Trägerfahrzeug (15) zwei Schwenkräder (16), vorzugsweise vier Schwenkräder, umfasst.

10. Zugsystem nach Anspruch 8 oder 9, wobei das Trägerfahrzeug (15) eine begrenzte Fahrgeschwindigkeit von 15 km/h, vorzugsweise 7 km/h, noch bevorzugter 3 km/h, hat, und/oder das Trägerfahrzeug (15) ein maximales Gesamtgewicht von 400 kg, vorzugsweise 200 kg, aufweist.

11. Zugsystem nach einem der Ansprüche 8-10, wobei das Zugsystem nur für Anwendung in Gebäuden eingerichtet ist.

12. Zugsystem nach einem der Ansprüche 8-11, wobei das Zugfahrzeug (20) einen Höhepunkt (21) aufweist, der mit dem Verbindungsabschnitt (9) der Anhängekupplungsanordnung (1) in Eingriff geht, so dass das Zugfahrzeug (20) in vollem Umfang unter die Anhängekupplungsanordnung (1) zum Eingreifen mit dem Verbindungsabschnitt (4) passieren kann.

13. Zugsystem nach Anspruch 8-12, wobei der Höhepunkt ein Vorsprung (21) ist, vorzugsweise ist der Höhepunkt ein Zapfen (21).

14. Zugsystem nach einem der Ansprüche 8-13, wobei die Breite des Zugfahrzeugs (20) kleiner als die Breite des Trägerfahrzeugs (15) ist, und oder, vorzugsweise ist die Breite des Zugfahrzeugs (20) kleiner als die Breite der Anhängekupplungsanordnung (1).

15. Zugsystem nach einem der Ansprüche 8-14, wobei das Zugfahrzeug (20) ein autogeführtes Fahrzeug, vorzugsweise ein elektrisches Fahrzeug ist.

16. Zugsystem nach einem der Ansprüche 8-15, wobei die Anhängekupplungsanordnung (1) an der Unterseite des Trägerfahrzeugs (15), vorzugsweise in einer im Wesentlichen mittigen Position befestigt ist.

## Revendications

1. Ensemble d'attelage de remorquage (1) dans lequel l'ensemble d'attelage de remorquage (1) comprend une première partie (2) et une deuxième partie (10), la première partie (2) et la deuxième partie (10) étant reliées par un premier axe essentiellement vertical (3), dans lequel les deux parties (2, 10) créent une section de liaison (9), à laquelle un véhicule de remorquage (20) peut se connecter, l'ensemble d'attelage de remorquage (1) étant agencé pour pouvoir atteindre une première et une deuxième configuration (A, B), dans la première configuration (A), l'ensemble d'attelage de remorquage (1) étant dans une configuration connectable dans laquelle, par la coopération de la première partie (2) et de la deuxième partie (10), un évidement (7) est créé, dans la deuxième configuration (B), l'ensemble d'attelage de remorquage (1) s'engageant dans une saillie (21) d'un véhicule de remorquage (20) en réduisant la taille de l'évidement (7), et en ce que le passage de la première configuration (A) à la deuxième configuration (B) est actionné par un véhicule de remorquage (20), **caractérisé en ce que** l'ensemble d'attelage de remorquage peut atteindre la première configuration (A) automatiquement au moyen d'au moins un dispositif de rétraction (4, 12, 52) couplé à au moins l'une de la première partie (2) ou la deuxième partie (10).

2. Ensemble d'attelage de remorquage (1) selon la revendication 1, dans lequel l'ensemble d'attelage de remorquage (1) est agencé pour atteindre la deuxième configuration (B) par un véhicule de remorquage s'engageant dans l'évidement (7) et poussant la première partie (2) et la deuxième partie (10) dans une direction prédéterminée (44), telle qu'une rotation autour de l'axe (3) assure le rétrécissement de l'évidement (7).

3. Ensemble d'attelage de remorquage (1) selon l'une quelconque des revendications 1 à 2, dans lequel le dispositif de rétraction comprend au moins un ressort hélicoïdal (4, 12) et / ou dans lequel le dispositif de rétraction comprend au moins un ressort à gaz (52).

4. Ensemble d'attelage de remorquage (1) selon l'une quelconque des revendications précédentes, dans lequel la section de connexion (9) peut guider une saillie (21) d'un véhicule de remorquage (20) vers l'évidement (7), le guidage étant effectué par deux des parois (40, 14) qui sont fournies par la première partie (2) et la deuxième partie (10) et que le bord respectif (40, 14) a son origine au bord de l'évidement (7) de sorte que les bords fournissent une forme de coin se rétrécissant dans la direction de l'évidement (7).

5. Ensemble d'attelage de remorquage (1) selon l'une quelconque des revendications précédentes, dans lequel l'ensemble d'attelage de remorquage (1) est agencé de manière à pouvoir engager un corps de véhicule de remorquage (22).

6. Ensemble d'attelage de remorquage (1) selon l'une quelconque des revendications précédentes, dans lequel sont prévus au moins deux moyens de préhension (8, 13) pouvant engager un véhicule de remorquage (20), lorsque l'ensemble d'attelage de remorquage (1) est dans sa deuxième configuration (B), de préférence les moyens de préhension (8, 13) sont agencés sur l'ensemble de l'attelage de remorquage (1) de telle sorte que l'engagement se fasse en saisissant autour d'un corps complète du véhicule de remorquage (22), ou d'une partie saillante (23) d'un véhicule de remorquage (20).

7. Ensemble d'attelage de remorquage (1) selon l'une quelconque des revendications précédentes, dans lequel sont prévus deux autres axes essentiellement verticaux (5, 11) à une extrémité respective de la première partie (2) et de la deuxième partie (10), les deux axes (5, 11) pouvant tourner ensemble avec l'axe (3) lorsqu'un véhicule de remorquage (20) s'engage dans l'ensemble de l'attelage de remorquage (1).

8. Système de remorquage comprenant un véhicule de remorquage (20), un véhicule porteur (15) et un ensemble d'attelage de remorquage (1) selon l'une quelconque des revendications précédentes, dans lequel l'ensemble attelage de remorquage (1) est fixé au véhicule porteur (15).

9. Système de remorquage selon la revendication 8, dans lequel le véhicule porteur (15) comprend deux roues pivotantes (16), de préférence quatre roues pivotantes.

10. Système de remorquage selon la revendication 8 ou 9, dans lequel le véhicule porteur (15) a une vitesse de déplacement limitée de 15 km / h, de préférence de 7 km / h, encore mieux de 3 km / h, et / ou le véhicule porteur (15) a un poids total maximal de 400 kg, de préférence 200 kg.

11. Système de remorquage selon l'une quelconque des revendications 8 à 10, dans lequel le système de remorquage est adopté pour une utilisation à l'intérieur uniquement.

12. Système de remorquage selon l'une quelconque des revendications précédentes 8 à 11, dans lequel le véhicule de remorquage (20) a un point haut (21) qui s'engage dans la section de connexion (9) de l'ensemble d'attelage de remorquage (1) si bien que le véhicule de remorquage (20) peut passer en totalité sous l'ensemble d'attelage de remorquage (1) afin d'engager la section de connexion (4).

13. Système de remorquage selon les revendications 8 à 12, dans lequel le point haut est une saillie (21), de préférence le point haut est une broche (21).

14. Système de remorquage selon l'une quelconque des revendications 8 à 13, dans lequel la largeur du véhicule de remorquage (20) est inférieure à la largeur du véhicule porteur (15) et, ou, de préférence, la largeur du véhicule de remorquage (20) est inférieure à la largeur de l'ensemble d'attelage de remorquage (1).

15. Système de remorquage selon l'une quelconque des revendications 8 à 14, dans lequel le véhicule de remorquage (20) est un véhicule autoguidé, de préférence un véhicule électrique.

16. Système de remorquage selon l'une quelconque des revendications 8 à 15, dans lequel l'ensemble d'attelage de remorquage (1) est fixé à la face inférieure du véhicule porteur (15), de préférence dans une position essentiellement centrée.
